# DEMANDE DE BREVET EUROPEEN

(11) **EP 1 199 200 A1**
(43) Date de publication de la demande: **24.04.2002**
(21) Numéro de dépôt: 01490040.1
(22) Date de dépôt: 04.10.2001
(51) Int. Cl.: B60H 3/06, B60H 1/34

(54) **Dispositif de diffusion d'un flux d'air à l'intérieur d'un habitacle de véhicule automobile**

(30) Priorité: 17.10.2000 FR 0013290
(71) Demandeur: Visteon Global Technologies, Inc., Dearborn, Michigan 48126 (US)
(72) Inventeur: Duriez, Dominique, c/o Visteon Systèmes Intérieurs, 62440 Harnes (FR); Dauvergne, Jean, c/o Visteon Systèmes Intérieurs, 62440 Harnes (FR)
(74) Mandataire: Duthoit, Michel

(57) **Abrégé**

L'invention est relative à un dispositif de diffusion d'un flux d'air F à l'intérieur d'un habitacle, notamment de véhicule automobile, comprenant une zone d'alimentation en air (2, 2A) dont au moins une partie de sa diffusion s'effectue au-travers d'un panneau poreux (3, 3A), constituant notamment au moins une partie d'une planche de bord (4, 4A), d'un panneau de porte ou d'un pavillon, et permettant le libre écoulement dudit flux d'air F simultanément dans toutes les directions de l'espace, caractérisé en ce qu'un organe filtrant (5, 5A) est interposé entre la zone d'alimentation en air (2, 2A) et le panneau poreux (3, 3A).

## Description

La présente invention concerne un dispositif de diffusion d'un flux d'air à l'intérieur d'un habitacle, notamment de véhicule automobile.

Toutefois, bien que plus particulièrement prévue pour de telles applications, elle pourra également être utilisée dans tout autre type de véhicule maritime, aérien, et/ou terrestre ainsi que pour des installations fixes.

Dans les véhicules automobiles actuellement connus, la diffusion d'air est généralement effectuée par des dispositifs débouchant au niveau d'éléments d'habillage tels que, par exemple, planches de bord, panneaux de portières ou autres. Ces dispositifs sont notamment constitués de différents conduits permettant l'acheminement d'un flux d'air jusqu'à un orifice d'où ledit flux est projeté dans l'habitacle à travers une grille de ventilation, éventuellement mobile, apparente à la surface desdits éléments.

L'inconvénient majeur de ce type de dispositif tient au fait que le ou les flux d'air émis suivent une direction précise et donnent ainsi aux occupants du véhicule une sensation de courant d'air qui, si elle peut être parfois voulue, est souvent désagréable et source de gêne lorsqu'une seule diffusion légère est désirée. De plus, de tels courants d'air ne favorisent pas l'établissement d'une ambiance d'air homogène à l'intérieur de l'habitacle du véhicule. On peut encore noter que, lorsque le débit d'air est maximum, il s'en suit des turbulences qui génèrent une gêne acoustique ; cette gêne vient s'additionner à celle qui trouve son origine au niveau du ventilateur, dont le son est conduit sans obstacle par les conduits d'air. Par ailleurs, la présence de grilles de ventilation à la surface des tableaux de bord nuit à leur aspect esthétique.

Il est également connu des dispositifs de diffusion d'air comprenant une zone d'alimentation en air avec lesquels au moins une partie de la diffusion s'effectue au-travers d'un panneau poreux constituant au moins une partie d'une planche de bord, d'un panneau de porte ou d'un pavillon.

De tels panneaux poreux ont permis de résoudre un certain nombre d'inconvénients liés à la diffusion d'air qui étaient auparavant effectués par des dispositifs débouchant au niveau d'éléments d'habillage comme ceux précités.

L'utilisation d'un panneau poreux a permis de résoudre également les inconvénients inhérents aux autres dispositifs en permettant le libre écoulement d'un flux d'air, s'effectuant simultanément dans toutes les directions de l'espace de l'habitacle.

Cependant, de tels panneaux poreux, s'ils ont permis de résoudre les inconvénients précités, présentent un inconvénient lié au fonctionnement lui-même de ces panneaux. En effet, leur porosité est faible, de sorte que la présence de particules dans l'air tend à les colmater ce qui réduit progressivement leur performance. En outre, les particules, constituées de suies et de matières huileuses ayant tendance à migrer à travers le panneau vers sa face visible, cela affecte leur aspect externe.

La présente invention a pour but de remédier à ces inconvénients et concerne à cet effet un dispositif de diffusion d'un flux d'air à l'intérieur d'un habitacle, notamment de véhicule automobile, comprenant une zone d'alimentation en air, dont au moins une partie de sa diffusion s'effectue au-travers d'un panneau poreux, constituant notamment au moins une partie d'une planche de bord, d'un panneau de porte, ou d'un pavillon, et permettant le libre écoulement dudit flux simultanément dans toutes les directions de l'espace, caractérisé en ce qu'un organe filtrant est interposé entre la zone d'alimentation en air et le panneau poreux. De manière avantageuse, son pouvoir de filtration est égal ou supérieur à celui du panneau poreux, de manière à retenir toutes particules correspondantes présentes dans l'air préalablement à son passage au-travers du panneau poreux.

De cette manière, les particules sont arrêtées par l'organe filtrant et non pas par le panneau poreux.

Par ailleurs, selon une autre caractéristique du dispositif de la présente invention, l'organe filtrant présente une surface supérieure à celle dudit panneau poreux pour augmenter sa surface utile de filtration et donc sa durée de vie.

La présente invention concerne également les caractéristiques qui ressortiront au cours de la description qui va suivre et qui devront être considérées isolément ou selon toutes les combinaisons techniques possibles.

Cette description donnée à titre d'exemple non limitatif, fera mieux comprendre comment l'invention peut être réalisée en référence aux dessins annexés sur lesquels :
- la figure 1 est une vue en coupe schématique d'un dispositif de diffusion d'un flux d'air selon un premier exemple de réalisation,
- la figure 2 est une vue en coupe schématique d'un dispositif de diffusion d'un flux d'air selon un second exemple de réalisation de l'invention,
- la figure 3 représente la pourcentage de particules filtrées en fonction de la taille de celles-ci pour des exemples de matériaux utilisés dans le dispositif conforme à l'invention.

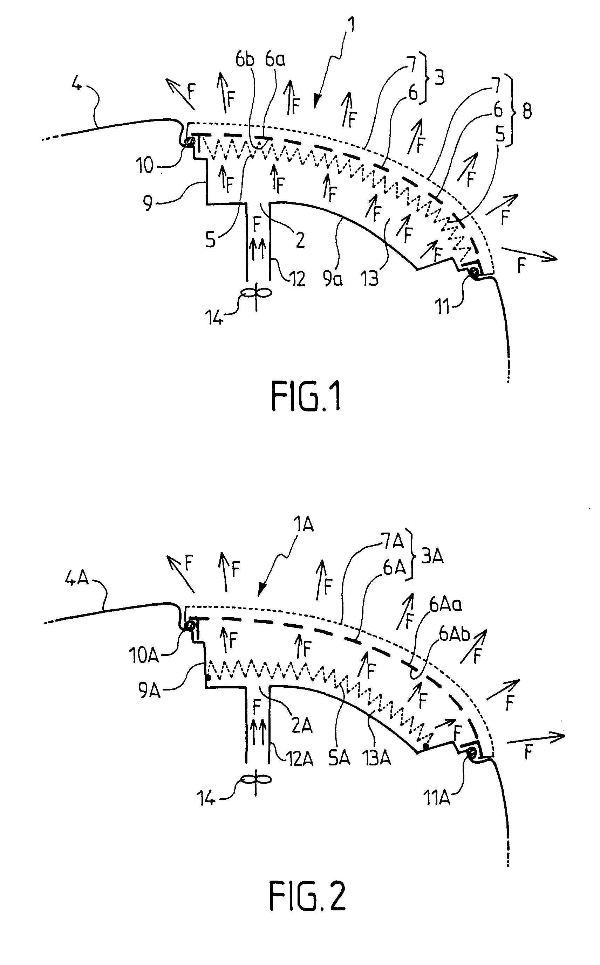

Le dispositif 1 de diffusion d'un flux d'air F à l'intérieur d'habitacle, représenté sur la figure 1, comprend une zone d'alimentation en air 2 dont au moins une partie de sa diffusion s'effectue au-travers d'un panneau poreux 3, constituant notamment au moins une partie d'une planche de bord 4 de manière à permettre le libre écoulement dudit flux F simultanément dans toutes les directions de l'espace.

Selon l'invention, un organe filtrant 5 est interposé entre la zone d'alimentation en air 2 et le panneau poreux 3.

De manière avantageuse, le pouvoir de filtration de l'organe filtrant 5 est égal ou supérieur à celui du panneau poreux 3, de manière à retenir toutes particules correspondantes présentes dans l'air préalablement à son passage au-travers dudit panneau poreux 3.

Préférentiellement, le panneau poreux 3 est constitué par une grille 6 dont la partie antérieure 6a est recouverte d'un matériau poreux 7, l'organe filtrant 5 étant quant à lui rapporté sur ledit panneau poreux 3 à la partie postérieure 6b de sa grille 6, sur la totalité de la surface de celle-ci.

Toujours selon l'exemple de réalisation de la figure 1, la grille 6, le matériau poreux 7 et l'organe filtrant 5 constituent un ensemble 8 monté de manière amovible sur un support fixe 9 solidaire de la planche de bord 4 en l'occurrence, ou d'un panneau de porte ou d'un pavillon, par l'intermédiaire de moyens de fixation complémentaires amovibles 10 et 11 dudit support 9 et de ladite grille 6.

Ces moyens de fixation complémentaires 10 et 11 pourront, par exemple, être considérés par des systèmes encliquetables.

Selon une autre caractéristique de l'invention, le support 9 forme une paroi 9a dans laquelle débouche un conduit de ventilation 12 et qui définit avec l'ensemble de filtration amovible 8, une enceinte 13 destinée à répartir le flux d'air F traversant ledit ensemble 8.

Par ailleurs, le support 9 permet de réaliser une continuité d'aspect entre la planche de bord 4, selon le présent exemple de réalisation et l'ensemble 8.

La ventilation pourra, par exemple, s'effectuer par l'intermédiaire d'un ventilateur 14.

Selon une autre caractéristique de l'invention, l'organe filtrant 5 est rapporté sur la grille 6 du panneau poreux 3, de manière amovible, afin de permettre son remplacement indépendamment de celui-ci.

Selon un second mode de réalisation représenté sur la figure 2, le panneau poreux 3A est constitué par une grille 6A dont la partie antérieure 6Aa est recouverte d'un matériau poreux 7A, ledit panneau 3A étant monté de manière amovible sur un support fixe 9A qui est solidaire de la planche de bord 4A selon le présent exemple de réalisation, par l'intermédiaire de moyens de fixation complémentaires amovibles 10A, 11A dudit support 9A et de ladite grille 6A.

Ledit organe filtrant 5A est rapporté de manière également amovible sur le support 9A pour permettre son remplacement indépendamment du panneau poreux 3A après dépose de celui-ci.

Comme dans l'exemple de réalisation précédent, le support 9A forme une paroi dans laquelle débouche un conduit de ventilation 12A et qui définit avec le panneau poreux 3A, une enceinte 13A destinée à répartir le flux d'air F traversant ledit panneau 3A.

Cela étant, l'organe filtrant 5, 5A présente une surface supérieure à celle dudit panneau poreux 3, 3A pour augmenter la surface utile de filtration dudit dispositif.

D'une manière commune aux deux exemples de réalisation des figures 1 et 2, l'organe filtrant 5, 5A est constitué d'une feuille formant des plis en accordéon, d'une manière connue en soi, permettant d'obtenir une surface effective par exemple de 3 à 10 fois supérieure à la surface frontale.

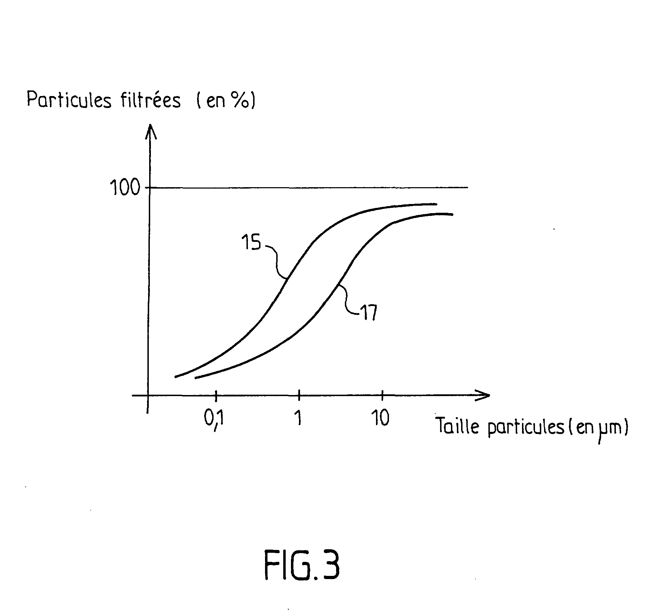

D'une manière également commune à ces modes de réalisation, l'organe de filtration 5, 5A est constitué d'une feuille de média filtrant. Comme déjà indiqué, ledit média filtrant présente un pouvoir filtrant égal ou supérieur à celui du matériau poreux employé, tel que cela est plus particulièrement illustré à la figure 3 selon laquelle on constate que le pourcentage 15 de particules filtrées par le média filtrant est supérieur à celui 17 de particules filtrées par le panneau poreux, ceci pour toutes les granulométries.

## Revendications

1. Dispositif de diffusion d'un flux d'air F à l'intérieur d'un habitacle, notamment de véhicule automobile, comprenant une zone d'alimentation en air (2, 2A) dont au moins une partie de sa diffusion s'effectue au-travers d'un panneau poreux (3, 3A), constituant notamment au moins une partie d'une planche de bord (4, 4A), d'un panneau de porte ou d'un pavillon, et permettant le libre écoulement dudit flux d'air F simultanément dans toutes les directions de l'espace, **caractérisé en ce qu'**un organe filtrant (5, 5A) est interposé entre la zone d'alimentation en air (2, 2A) et le panneau poreux (3, 3A).

2. Dispositif selon la revendication 1, dans lequel ledit organe de filtration présente un pouvoir de filtration égal ou supérieur à celui du panneau poreux, de manière à retenir toutes particules correspondantes présentes dans l'air, préalablement à son passage au-travers du panneau poreux (3, 3A).

3. Dispositif selon la revendication 1, dans lequel le panneau poreux (3) est constitué par une grille (6) dont la partie antérieure (6a) est recouverte d'un matériau poreux (7) et en ce que l'organe filtrant (5) est rapporté sur ledit panneau (3) à la partie postérieure (6b) de sa grille (6) sur la totalité de la surface de celle-ci.

4. Dispositif selon la revendication 3, dans lequel la grille (6), le matériau poreux (7) et l'organe filtrant (5) constituent un ensemble (8) monté de manière amovible sur un support fixe (9) solidaire de la planche de bord (4), du panneau de porte ou du pavillon, par l'intermédiaire de moyens de fixation complémentaires amovibles (10 et 11) dudit support (9) et de ladite grille (6).

5. Dispositif selon la revendication 4, dans lequel le support (9) forme une paroi (9a) dans laquelle débouche un conduit de ventilation (12) et qui définit avec l'ensemble de filtration amovible (8) une enceinte (13) destinée à répartir le flux d'air F traversant ledit ensemble (8).

6. Dispositif selon l'une des revendications 3 à 5, dans lequel l'organe filtrant (5) est rapporté sur la grille (6) du panneau poreux (3) de manière amovible afin de permettre son remplacement, indépendamment de celui-ci.

7. Dispositif selon la revendication 1, dans lequel le panneau poreux (3A) est constitué par une grille (6A) dont la partie antérieure (6Aa) est recouverte d'un matériau poreux (7A), ledit panneau (3A) étant monté de manière amovible sur un support fixe (9A) solidaire de la planche de bord (4A), du panneau de porte ou du pavillon, par l'intermédiaire de moyens de fixation complémentaires amovibles (10A, 11A) dudit support (9A) et de ladite grille (6A) et en ce que ledit organe filtrant (5A) est rapporté également de manière amovible sur le support (9A) pour permettre son remplacement indépendamment du panneau poreux (3A), après dépose de celui-ci.

8. Dispositif selon la revendication 7, dans lequel le support (9A) forme une paroi dans laquelle débouche un conduit de ventilation qui définit avec le panneau poreux (3A) une enceinte (13A), destinée à répartir le flux d'air F traversant ledit panneau (3A).

9. Dispositif selon la revendication 1, dans lequel l'organe filtrant (5, 5A) présente une surface supérieure à celle dudit panneau poreux (3, 3A) pour augmenter la surface utile de filtration dudit dispositif.

10. Dispositif selon la revendications 9, dans lequel l'organe filtrant (5, 5A) est constitué d'une feuille formant des plis en accordéon.

11. Dispositif selon l'une des revendications 1 à 9, dans lequel l'organe de filtration (5, 5A) est constitué d'une feuille de média filtrant.
